# EUROPÄISCHE PATENTANMELDUNG

(11) **EP 3 764 273 A1**
(43) Veröffentlichungstag der Anmeldung: **13.01.2021**
(21) Anmeldenummer: 19185047.8
(22) Anmeldetag: 08.07.2019
(51) Int. Cl.: G06K 9/00, G06K 9/03

(54) **SYSTEM UND VERFAHREN ZUM IDENTIFIZIEREN EINER PALETTE**

(71) Anmelder: Fraunhofer-Gesellschaft zur Förderung der angewandten Forschung e.V., 80686 München (DE)
(72) Erfinder: SAUM, NORBERT, 79110 Freiburg (DE); CARL, DANIEL, 79110 Freiburg (DE); WRYCZA, PHILIPP, 44227 Dortmund (DE); LANGE, VOLKER, 44227 Dortmund (DE)

(57) **Zusammenfassung**

Die Erfindung betrifft ein Palettenidentifikationssystem für das Identifizieren einer Palette aufweisend eine Objekterfassungseinheit,
die derart eingerichtet und angeordnet ist, dass sie in einem Betrieb des Palettenidentifikationssystems mittels einer Mustererfassung ein Muster und ein Palettenmerkmal der Palette erfasst und daraus Palettendaten generiert,
wobei das Muster als ein Bestandteil der Palette ausgebildet ist,
wobei das Palettenmerkmal als ein charakteristisches Merkmal der Palette
ausgebildet ist, und
eine wirksam mit der Objekterfassungseinheit verbundene computergestützte Auswerteeinheit, welche derart eingerichtet ist, dass sie Palettendaten von der Objekterfassungseinheit erhält und diese Palettendaten verarbeitet und bereitstellt, aufweisend
eine deaktivierbare Lageidentifikationseinheit,
welche derart ausgebildet und eingerichtet ist, dass sie mit Hilfe des Palettenmerkmals eine Palettenlage bestimmt, wobei die Palettenlage durch die Pose der Palette relativ zur Objekterfassungseinheit gebildet ist,
eine Prüfbereichsbestimmungseinheit,
welcher derart ausgebildet und eingerichtet ist, dass sie in der Palettenlage einen Prüfbereich bestimmt, wobei sich der Prüfbereich entlang einer Prüfbereichsbegrenzung auf dem Muster erstreckt,
einen Signaturgenerator,
welcher aus Palettendaten Signaturdaten extrahiert und daraus eine Prüfbereichssignatur generiert, wobei die Signaturdaten gebildet sind durch diejenigen Palettendaten, welche innerhalb des Prüfbereichs liegen,
eine Signaturvergleichseinheit,
welche derart ausgebildet und eingerichtet ist, dass sie die Prüfbereichssignatur eines Musters einer zweiten Mustererfassung mit der Prüfbereichssignatur eines Musters einer ersten Mustererfassung vergleicht und daraus eine Signaturabweichung bestimmt, wobei der Prüfbereich des Musters der zweiten Mustererfassung in der gleichen Palettenlage der Palette bestimmt ist wie der Prüfbereich des Musters der ersten Mustererfassung,
eine die Signaturabweichung klassifizierende Signaturklassifikationseinheit.

## Beschreibung

### Technisches Gebiet:

Die vorliegende Erfindung betrifft ein Palettenidentifikationssystem für das Identifizieren einer Palette.

Die vorliegende Erfindung betrifft darüber hinaus ein Verfahren zum Identifizieren einer Palette.

Systeme zum Identifizieren von Paletten werden zu verschiedenen Anlässen eingesetzt. Derartige Systeme kommen beispielsweise zum Einsatz im Bereich der Logistik, also dort wo ein bestimmtes Objekt von einem Ort zu einem anderen Ort verbracht werden soll.

### Stand der Technik:

Zum Identifizieren einer Palette im Bereich der Logistik sind seit langer Zeit Aufkleber bekannt. Diese Aufkleber werden auf die Palette geklebt und weisen eine eindeutige Identifikationsmöglichkeit auf, beispielsweise einen QR-Code oder einen so genannten RFID-Tag. Nachteilig hieran ist, dass ein derartiger Aufkleber zunächst auf die Palette aufgebracht und nach dem Identifizieren der Palette wieder entfernt werden muss, um den Ursprungszustand der Palette wiederherzustellen. Beim Entfernen bleiben zudem häufig Kleberreste auf der Palette zurück. Des Weiteren ist insbesondere das Entfernen von Aufklebern mit hohem zeitlichen Aufwand verbunden.

### Offenbarung der Erfindung:

Es ist Aufgabe der Erfindung, ein System und ein Verfahren zur Palettenidentifikation der eingangs genannten Art effizienter zu gestalten.

Diese Aufgabe wird erfindungsgemäß gelöst durch ein Palettenidentifikationssystem für das Identifizieren einer Palette aufweisend:
eine Objekterfassungseinheit,
   die derart eingerichtet und angeordnet ist, dass sie in einem Betrieb des Palettenidentifikationssystems mittels einer Mustererfassung ein Muster und ein Palettenmerkmal der Palette erfasst und daraus Palettendaten generiert,
   wobei das Muster als ein Bestandteil der Palette ausgebildet ist,
   wobei das Palettenmerkmal als ein charakteristisches Merkmal der Palette ausgebildet ist, und
eine wirksam mit der Objekterfassungseinheit verbundene computergestützte Auswerteeinheit, welche derart eingerichtet ist, dass sie Palettendaten von der Objekterfassungseinheit erhält und diese Palettendaten verarbeitet und bereitstellt, aufweisend
   eine deaktivierbare Lageidentifikationseinheit, welche derart ausgebildet und eingerichtet ist,
      dass sie mit Hilfe des Palettenmerkmals eine Palettenlage bestimmt,
      wobei die Palettenlage durch die Pose der Palette relativ zur Objekterfassungseinheit gebildet ist,
   eine Prüfbereichsbestimmungseinheit, welche derart ausgebildet und eingerichtet ist,
      dass sie in der Palettenlage einen Prüfbereich bestimmt,
      wobei sich der Prüfbereich entlang einer Prüfbereichsbegrenzung auf dem Muster erstreckt,
   einen Signaturgenerator,
      welcher aus Palettendaten Signaturdaten extrahiert und daraus eine Prüfbereichssignatur generiert,
      wobei die Signaturdaten gebildet sind durch diejenigen Palettendaten, welche innerhalb des Prüfbereichs liegen,
   eine Signaturvergleichseinheit,
      welche derart ausgebildet und eingerichtet ist, dass sie die Prüfbereichssignatur eines Musters einer zweiten Mustererfassung mit der Prüfbereichssignatur eines Musters einer ersten Mustererfassung vergleicht und daraus eine Signaturabweichung bestimmt,
      wobei der Prüfbereich des Musters der zweiten Mustererfassung in der gleichen Palettenlage der Palette bestimmt ist wie der Prüfbereich des Musters der ersten Mustererfassung,
   eine die Signaturabweichung klassifizierende Signaturklassifikationseinheit.

Das erfindungsgemäße Palettenidentifikationssystem weist eine Objekterfassungseinheit und eine damit verbundene computergestützte Auswerteeinheit auf.

Die Objekterfassungseinheit ist ausgebildet und eingerichtet ein Muster einer Palette von zumindest einer Seite zu erfassen. Diese Erfassung des Musters erfolgt punktmäßig, zeilenmäßig oder flächenmäßig. Eine Objekterfassungseinheit ist bevorzugt gebildet durch eine Kamera, die das Muster flächenmäßig erfasst.

Eine Palette ist eine Anordnung für Transport, Lagerung und/oder Bündelung eines Objekts oder mehrerer Objekte und zeichnet sich aus durch eine flache Konstruktion und ist meist platzsparend stapelbar. Eine Palette ist aus Holz, Kunststoff, Metall, Pappe oder einer Kombination der vorgenannten Materialien. Häufig verfügt eine Palette über seitliche Aussparungen, um sie mit Hilfe eines Flurfördergeräts, beispielsweise eines Gabelstaplers, zu transportieren. Da das erfindungsgemäße Palettenidentifikationssystem der Identifikation einer Palette dient, können im Sinne der Erfindung die Palette der ersten Erfassung und die Palette der zweiten Erfassung identisch oder verschieden zueinander sein. Die Verschiedenartigkeit der beiden vorgenannten Paletten aus der ersten Erfassung und der zweiten Erfassung kann Folge einer gewollten oder ungewollten Veränderung einer Palette zwischen erster und zweiter Erfassung sein. Beispielsweise kann eine Palette einem Alterungsprozess unterworfen sein und dadurch verändert werden.

Im Sinne der Erfindung ist ein Muster ein Bestandteil der Palette, welches mit Hilfe der Objekterfassungseinheit erfasst wird. Als Bestandteil der Palette kann das Muster nicht von der Palette getrennt werden, ohne dass das Muster und/oder die Palette zerstört oder zumindest eines der beiden in seinem Wesen stark verändert wird. Das Muster ist als nicht selbstständig anzusehen, sondern als zur Palette gehörend. Ein Muster ist beispielsweise eine Ecke, eine Kante, ein bestimmter Winkel, ein Buchstabe, eine Zahl, ein Zeichen. Bevorzugt ist ein Muster eine Maserung, ein Höhen-Tiefenprofil, eine Oberflächenstruktur, eine Linie, eine Linienkombination, eine Farbe, eine Farbkombination, ein Grauwert, eine Grauwertkombination, ein Farbverlauf, ein Grauwertverlauf oder eine Kombination zweier oder mehrerer der vorgenannten Merkmale. Beispielhaft und nicht abschließend ist ein Muster gebildet durch eine Maserung eines Holzes oder Holzwerkstoffs, eine Feinstruktur eines Papiers oder einer Pappe, einer Struktur einer Metall- oder Kunststoffoberfläche.

Da das erfindungsgemäße Palettenidentifikationssystem der Identifikation einer Palette dient, können im Sinne der Erfindung die Palette der ersten Mustererfassung und die Palette der zweiten Mustererfassung identisch oder verschieden zueinander sein. Die Verschiedenartigkeit der beiden vorgenannten Paletten, d.h. bei erster und zweiter Mustererfassung, kann Folge einer gewollten oder ungewollten Veränderung einer Palette zwischen den beiden vorgenannten Mustererfassungen sein.

Regelmäßig erfolgt die erste Mustererfassung des Musters zeitlich vor der zweiten Mustererfassung des Musters.

Die Objekterfassungseinheit erfasst bei der Mustererfassung das Muster der Palette sowie zumindest ein Palettenmerkmal und generiert daraus Palettendaten.

In einer bevorzugten Ausführungsform der Erfindung wird bei der Mustererfassung ein Palettenmerkmal der Palette erfasst.

Ein Palettenmerkmal ist ein charakteristisches Merkmal einer Palette wie beispielsweise eine Ecke, eine Kante, ein bestimmter Winkel, eine Bohrung, eine Nut, ein Buchstabe, eine Zahl, ein Zeichen, eine Maserung, ein Höhen-Tiefenprofil, eine Oberflächenstruktur, eine Linie, eine Linienkombination, eine Farbe, eine Farbkombination, ein Grauwert, eine Grauwertkombination, ein Farbverlauf, ein Grauwertverlauf, die teilweise oder vollständige Außenkontur der Palette, der Mittelpunkt eines zwei- oder dreidimensionalen Abschnitts der Palette oder eine Kombination zweier oder mehrerer der vorgenannten Merkmale. Bevorzugt ist das Palettenmerkmal ein dauerhaftes Merkmal.

In einer weiteren Ausführungsform der Erfindung ist das Palettenmerkmal erst mit Hilfe weiterer Maßnahmen identifizierbar, beispielsweise mittels UV-Bestrahlung.

In einer Ausführungsform der Erfindung wird bei der Mustererfassung neben einem ersten Palettenmerkmal zumindest ein weiteres Palettenmerkmal der Palette erfasst. Dies ist unter anderem relevant, wenn beispielsweise die Palette einem Veränderungsprozess unterworfen ist und als Folge dieses Veränderungsprozesses ein erstes Palettenmerkmal verändert, beschädigt oder entfernt wurde. In einem solchen Fall wird unter Verwendung zumindest eines weiteren Palettenmerkmals die Palettenlage und der Prüfbereich bestimmt. Dies ermöglicht eine Feststellung von Übereinstimmung oder Abweichung zweier Paletten im Fall der Beschädigung, Veränderung oder Entfernung eines Palettenmerkmals. In einem derartigen Fall der Veränderung, Beschädigung oder Entfernung eines ersten Palettenmerkmals gelingt mit Hilfe des weiteren Palettenmerkmals trotzdem die Bestimmung eines Prüfbereichs und eröffnet damit die Möglichkeit zur Signaturgenerierung und zum Signaturvergleich.

Die Erfassung mehrerer Palettenmerkmale bietet also eine höhere Wahrscheinlichkeit, eine Palette zu identifizieren.

Die Objekterfassungseinheit ist mit einer computergestützten Auswerteeinheit verbunden. Die computergestützte Auswerteeinheit ist dazu ausgebildet und eingerichtet, dass sie Palettendaten von der Objekterfassungseinheit erhält und diese verarbeitet und bereitstellt. In einer Ausführungsform der Erfindung besteht das Verarbeiten der Palettendaten lediglich im Speichern dieser Palettendaten.

Die Palettendaten aus der Erfassung des Musters der Palette enthalten die Lagedaten der Objekterfassungseinheit implizit oder explizit.

Die expliziten Lagedaten der Objekterfassungseinheit sind diejenigen Lagedaten, welche die Objekterfassungseinheit beispielsweise mit Hilfe von Sensoren wie GPS oder Neigungssensoren erfasst und bereitstellt. Derartige Daten sind unter anderem die absolute Lage der Objekterfassungseinheit und dessen Neigung in den Raumrichtungen.

Die Lagedaten der Objekterfassungseinheit relativ zum Muster der Palette sind implizit in den Palettendaten enthalten, da das erfasste Muster nur in einer einzigen Lage der Objekterfassungseinheit gegenüber dem Muster genau in dieser Art zu erfassen ist. Mit Hilfe eines Palettenmerkmals und dieser in den Palettendaten implizit enthaltenen Lagedaten der Objekterfassungseinheit wird durch eine Lageidentifikationseinheit eine Palettenlage bestimmt. Die Palettenlage ist durch die Pose der Palette relativ zur Objekterfassungseinheit bestimmt. Die Pose der Palette ist die Kombination von Position und Orientierung der Palette im dreidimensionalen Raum. Die Ermittlung der Palettenlage der Palette erfolgt insbesondere durch Bestimmung von Daten, welche Position, Größe und Bildschärfe des Palettenmerkmals beschreiben. Auch die Orientierung des Palettenmerkmals ist zur Ermittlung der Palettenlage verwendbar. Für die Bestimmung der Palettenlage der Palette bei der ersten und bei der zweiten Musterfassung wird das gleiche Palettenmerkmal verwendet.

Die Daten, welche die Palettenlage der ersten Mustererfassung beschreiben, werden gespeichert.

In einer bevorzugten Ausführungsform der Erfindung werden die Daten, welche die Palettenlage der ersten Mustererfassung der Palette beschreiben, als Referenzpalettenlage gespeichert. Bei einer Mustererfassung einer neu erfassten Palette wird zur Bestimmung von dessen Palettenlage die Referenzprüflage genutzt, indem die Palettenlage der neu erfassten Palette in Relation zur Referenzprüflage bestimmt wird.

In einer bevorzugten Ausführungsform der Erfindung ist das Palettenmerkmal nicht durch das Muster oder ein Teil des Musters gebildet. Das bedeutet Palettenmerkmal und Muster unterscheiden sich voneinander. Bei einer derartigen Ausführungsform der Erfindung ist das Palettenmerkmal beispielsweise gebildet durch eine Kante der Palette und das Muster beispielsweise durch eine Maserung.

In einer anderen Ausführungsform der Erfindung ist das Palettenmerkmal gebildet aus der Kombination von abschnittsweisem oder vollständigem Palettenmerkmal selbst, beispielsweise eine Buchstabenkombination, und abschnittsweisem oder vollständigem Muster, beispielsweise eine Maserung. In dieser Ausführungsform der Erfindung dient die vorbeschriebene Kombination von Palettenmerkmal und Muster der Ermittlung von Palettenlage der Palette und Bestimmung des Prüfbereichs und der Prüfbereichssignatur.

In einer weiteren Ausführungsform der Erfindung ist das Palettenmerkmal teilweise oder vollständig aus dem Muster gebildet. In dieser Ausführungsform bildet ein Höhen-Tiefenprofil auf der Palette sowohl das Muster als auch das Palettenmerkmal.

In einer weiteren Ausführungsform der Erfindung ist eine Palette bei stationärer Objekterfassungseinheit bei der zweiten Mustererfassung in der gleichen Pose relativ zur Objekterfassungseinheit positioniert, das heißt in der gleichen Palettenlage, wie bei der ersten Mustererfassung. In einem derartigen Fall ist die Auswertung des Palettenmerkmals zur Bestimmung der Palettenlage der Palette und damit auch die Nutzung der Lageidentifikationseinheit entbehrlich. In diesem Fall kann die Lageidentifikationseinheit deaktiviert werden. Dies ist beispielsweise der Fall, wenn die Objekterfassungseinheit statisch gegenüber der Palette angeordnet ist und die Paletten, wie bereits beschrieben, immer in der gleichen Pose zur Objekterfassungseinheit angeordnet sind, beispielsweise auf einem Fließband auf dem die Paletten entsprechend angeordnet sind. Im einem derartigen Fall wird das Palettenmerkmal lediglich zur Bestimmung des Prüfbereichs verwendet.

Mit Hilfe eines Palettenmerkmals wird ein Prüfbereich auf dem Muster bestimmt.

Ein Prüfbereich ist ein Bereich, der sich auf dem Muster der Palette erstreckt. Der Prüfbereich erstreckt sich entlang einer Prüfbereichsbegrenzung auf dem Muster. Der Prüfbereich ist regelmäßig virtueller, nicht dauerhafter Natur. Der Prüfbereich kann verschiedene geometrische Formen annehmen.

In einer Ausführungsform der Erfindung erstreckt sich der Prüfbereich von einem Prüfbereichsursprung entlang definierter Prüfbereichskoordinaten oder einer definierten Prüfbereichsabmessung auf dem Muster.

In einer bevorzugten Ausführungsform der Erfindung ist der Prüfbereich rechteckig ausgebildet. In einer anderen Ausführungsform der Erfindung ist der Prüfbereich rund ausgebildet.

Zusammengefasst dient ein Palettenmerkmal der Bestimmung eines Prüfbereichs auf dem Muster der Palette und/oder der Ermittlung der Palettenlage der Palette.

Aus den Palettendaten generiert ein Signaturgenerator Signaturdaten. Hierzu werden zunächst aus den Palettendaten diejenigen Palettendaten extrahiert, welche innerhalb des Prüfbereichs liegen. Diese extrahierten Palettendaten bilden die Signaturdaten. Aus diesen Signaturdaten wird nachfolgend von dem Signaturgenerator eine Prüfbereichssignatur generiert. Mit anderen Worten ausgedrückt: Entsprechend der Prüfbereichsbegrenzungen werden aus den Palettendaten die Signaturdaten sozusagen herausgeschnitten. Aus diesen Signaturdaten bildet der Signaturgenerator die Prüfbereichssignatur.

In einer Ausführungsform der Erfindung erstreckt sich der Prüfbereich nur abschnittsweise auf dem Muster. Dies hat den Vorteil, dass nicht die Palettendaten der gesamten Fläche des Musters oder gar der gesamten Palette zu verarbeiten sind.

Eine Prüfbereichssignatur fasst regelmäßig individuelle Charakteristika eines Musters des Prüfbereichs in einer komprimierten Darstellung zusammen. Sie ist regelmäßig aus einer Folge von Zahlen, Buchstaben und/oder Zeichen gebildet. Bevorzugt ist eine Prüfbereichssignatur aus einer Folge von Nullen und Einsen gebildet. Die durch eine Prüfbereichssignatur zusammengefassten individuellen Charakteristika eines Musters sind eine Maserung, ein Höhen-Tiefenprofil, eine Oberflächenstruktur, eine Linie, eine Linienkombination, eine Farbe, eine Farbkombination, ein Grauwert, eine Grauwertkombination, ein Farbverlauf, ein Grauwertverlauf aber auch eine Ecke, eine Kante, ein bestimmter Winkel, ein Buchstabe, eine Zahl, ein Zeichen, eine Mehrzahl eines der vorgenannten Merkmale oder eine Kombination zweier oder mehrerer der vorgenannten Merkmale.

In einer Ausführungsform der Erfindung wird jede vom Signaturgenerator generierte Prüfbereichssignatur gespeichert.

In einer bevorzugten Ausführungsform der Erfindung wird die Prüfbereichssignatur mit einem Identifikator versehen, sodass jede Prüfbereichssignatur zu identifizieren ist. Die Prüfbereichssignatur wird zusammen mit dem Identifikator gespeichert.

Im Sinne der vorliegenden Erfindung ist ein Identifikator ein eindeutiges und nur einmal vorkommendes Kennzeichen einer Prüfbereichssignatur. Ein derartiger Identifikator besteht bevorzugt aus Buchstaben, Zahlen, Zeichen oder einer Kombination daraus.

Ein Identifikator ist in einer bevorzugten Ausführungsform der Erfindung einem Produkt oder Erzeugnis zugeordnet. Dieses Versehen der Prüfbereichssignatur mit einem Identifikator dient unter anderem der Rückverfolgbarkeit einer Palette, beispielsweise im Rahmen eines Qualitätsmanagements.

Die Signaturvergleichseinheit vergleicht die Prüfbereichssignatur des Musters einer ersten Mustererfassung mit der Prüfbereichssignatur des Musters einer zweiten Mustererfassung und generiert daraus eine Signaturabweichung. Hierfür ist es erforderlich, dass der Prüfbereich bei der zweiten Mustererfassung in der gleichen Palettenlage bestimmt wird wie bei der ersten Mustererfassung. Die Signaturabweichung wird von der Signaturklassifikationseinheit klassifiziert.

In einer bevorzugten Ausführungsform der Erfindung werden nur Prüfbereichssignaturen verglichen, welche aus Prüfbereichen bestimmt sind, welche die gleiche geometrische Ausbildung und die gleiche Fläche aufweisen.

In einer weiteren Ausführungsform der Erfindung werden zwei formal unterschiedlich große Prüfbereiche miteinander verglichen. In einem derartigen Fall wird der kleinere Prüfbereich einer Mustererfassung in dem größeren Prüfbereich einer anderen Mustererfassung bestimmt und dann die beiden flächen- und abmessungsmäßig gleichen Prüfbereiche miteinander verglichen.

In einer Ausführungsform der Erfindung wird die Prüfbereichssignatur einer zweiten Mustererfassung bei der erneuten Erfassung der Palette als Referenz genutzt. Es wird also faktisch eine aktualisierte Prüfbereichssignatur erhalten, welche für eine folgende Identifizierung der Palette als Referenz nutzbar ist. Zusammengefasst ausgedrückt: Die Prüfbereichssignatur ist im Produktions-/Verarbeitungsprozess aktualisierbar. Auch bei Alterung der Palette kann die Prüfbereichssignatur sozusagen parallel zur Palette "mitaltern" und ermöglicht auch die Identifizierung einer gealterten Palette.

In einer Ausführungsform der Erfindung klassifiziert die Signaturklassifikationseinheit die Signaturabweichung anhand zumindest eines Signaturschwellwerts, beispielsweise anhand statistischer Methoden. Ein geeigneter Signalschwellwert ist beispielsweise die Ähnlichkeit der Prüfbereichssignatur einer Palette zur Gesamtheit der Prüfbereichssignaturen aller anderen Paletten. Liegt die Signaturabweichung der zu identifizierenden Palette unter dem des als noch ausreichend definierten Signaturschwellwertes, so ist die Signaturabweichung als gering anzusehen und die Palette wird als identifiziert angesehen. Liegt hingegen die Signaturabweichung der zu identifizierenden Palette über dem des als noch ausreichend definierten Signaturschwellwert, so ist die Signaturabweichung als groß anzusehen und die Palette wird als nicht identifiziert angesehen.

In einer weiteren Ausführungsform der Erfindung erfolgt die Signaturklassifizierung einer erfolgreichen Identifizierung einer Palette wie folgt. Die Prüfbereichssignatur der zu identifizierenden Palette wird mit allen verfügbaren Prüfbereichssignaturen verglichen. Dies erfolgt in zwei Schritten. Erster Schritt: Liegt die Signaturabweichung zweier Prüfbereichssignaturen unterhalb des Schwellwerts der noch als ausreichend definiert ist, so sind diese beiden zwei Prüfbereichssignaturen ähnlich. Zweiter Schritt: Diese als ähnlich identifizierte Prüfbereichssignatur muss gegenüber den anderen Prüfbereichssignaturen unähnlich sein, d.h. die Signaturabweichung gegenüber den anderen Prüfbereichssignaturen muss deutlich über dem Schwellwert liegen.

In einer Ausführungsform der Erfindung ist die computergestützte Auswerteeinheit mit einer Signalisierungseinheit verbunden. Die Signalisierungseinheit signalisiert eine von der Signaturklassifikationseinheit klassifizierte Signaturabweichung.

In einer bevorzugten Ausführungsform der Erfindung wird eine noch als ausreichend oder als nicht mehr ausreichend klassifizierte Signaturabweichung, beispielsweise durch "Signatur erkannt" beziehungsweise "Signatur nicht erkannt" oder "Palette identifiziert" beziehungsweise "Palette nicht identifiziert" signalisiert.

In einer weiteren Ausführungsform der Erfindung signalisiert die Signalisierungseinheit eine Übereinstimmung des Prüfbereichs der zweiten Mustererfassung mit dem Prüfbereich der ersten Mustererfassung beispielsweise durch Anzeigen von "Prüfbereich ok" oder "Prüfbereich gefunden" oder eine Abweichung des Prüfbereichs der zweiten Mustererfassung zu dem Prüfbereich der ersten Mustererfassung durch Anzeigen von "Prüfbereich nicht ok" oder "Prüfbereich nicht gefunden".

Damit der Prüfbereich der zweiten Mustererfassung mit dem Prüfbereich der ersten Mustererfassung eine Übereinstimmung zeigen kann, ist eine Voraussetzung, dass beide Prüfbereiche in der gleichen Palettenlage bestimmt werden. Dabei gilt eine geringfügige Abweichung in der Palettenlage bei erster und zweiter Mustererfassung noch als gleiche Palettenlage. Eine geringfügige Abweichung der Palettenlage ist insbesondere eine Abweichung von wenigen Prozent.

In einer weiteren Ausführungsform der Erfindung ist die Abweichung in der Palettenlage bei erster und zweiter Mustererfassung mittels eines Schwellwerts klassifiziert. Unterhalb dieses Schwellwerts gilt eine Abweichung in der Palettenlage bei erster und zweiter Mustererfassung noch als geringfügig und damit als gleiche Palettenlage und oberhalb dieses Schwellwerts gilt die Palettenlage als unterschiedlich.

In einer weiteren Ausführungsform der Erfindung ist die Signalisierungseinheit derart ausgebildet und eingerichtet, dass sie signalisiert welche Operationen auszuführen sind, um den übereinstimmenden Prüfbereich zu finden, beispielsweise durch Hinweise "nach links" beziehungsweise "nach rechts", "nach oben" beziehungsweise "nach unten", "rotieren im Uhrzeigersinn" beziehungsweise "rotieren entgegen dem Uhrzeigersinn", "Abstand verringern" beziehungsweise "Abstand vergrößern" oder eine Kombination aus zumindest zweien der Vorgenannten.

In einer weiteren Ausführungsform der Erfindung ist die Signalisierungseinheit derart ausgebildet und eingerichtet, dass sie die Prüfbereichsabweichung, die Prüfbereichsübereinstimmung, die Signaturabweichung, die Signaturübereinstimmung oder eine Kombination mindestens zweier davon signalisiert.

Das Signalisieren erfolgt insbesondere mittels eines optischen Signals, eines akustischen Signals, eines elektrischen Signals, eines haptischen Signals, beispielsweise in der Art einer Vibration, oder einer Kombination zweier oder mehrerer davon.

Die Lageidentifikationseinheit, der Prüfbereichsbestimmungseinheit, der Signaturgenerator, die Signaturvergleichseinheit und die Signaturklassifikationseinheit sind Teil der computerstützten Auswerteeinheit. Die Komponenten der computerstützten Auswerteeinheit können einzeln oder in Kombination mindestens zweier Komponenten auch auf getrennten Systemen laufen.

Die Lageidentifikationseinheit ist deaktivierbar ausgebildet.

Mit anderen Worten ausgedrückt funktioniert die Palettenidentifizierung wie folgt: Zur Identifizierung einer Palette wird diese Palette mittels einer Objektserfassungseinheit erfasst und daraus die Palettendaten generiert. Als Objektserfassungseinheit dient beispielsweise eine Flächenkamera. Bei dieser Erfassung wird bevorzugt nicht die gesamte Palette erfasst, sondern nur ein Muster der Palette. Dieses Muster ist Bestandteil der Palette. Dabei kann die Palette auch ein Aufkleber sein. Diese Palettendaten werden an die computergestützte Auswerteeinheit übergeben und von dieser verarbeitet und bereitgestellt. Diese computergestützte Auswerteeinheit weist eine Lageidentifikationseinheit, eine Prüfbereichsbestimmungseinheit, einen Signaturgenerator, eine Signaturvergleichseinheit und eine Signaturklassifikationseinheit auf. Die Lageidentifikationseinheit bestimmt anhand eines charakteristischen Merkmals der Palette, hier Palettenmerkmal genannt, die Palettenlage. Die Palettenlage ist charakterisiert durch die Pose des Musters der Palette relativ zur Objekterfassungseinheit. Ferner bestimmt die Prüfbereichsbestimmungseinheit mit Hilfe eines Palettenmerkmals einen Prüfbereich auf dem Muster. Dieser Prüfbereich erstreckt sich entlang einer Prüfbereichsbegrenzung auf dem Muster. Der Signaturgenerator extrahiert aus den Palettendaten, welche innerhalb dieses Prüfbereichs liegen, Signaturdaten und generiert aus diesen Signaturdaten eine Prüfbereichssignatur. Die Signaturvergleichseinheit vergleicht schließlich die Prüfbereichssignatur des Musters einer ersten Mustererfassung mit der Prüfbereichssignatur des Musters einer zweiten Mustererfassung. Aus dem Vergleichsergebnis wird eine Signaturabweichung generiert. Für den Vergleich zweier Prüfbereichssignaturen ist es erforderlich, dass der Prüfbereich des Musters der zweiten Mustererfassung in der gleichen Palettenlage bestimmt wird wie der Prüfbereich aus der ersten Mustererfassung. Dabei gilt eine geringfügige Abweichung in der Palettenlage bei erster und zweiter Mustererfassung noch als gleiche Palettenlage.

Tritt nun das Problem auf, dass das Palettenmerkmal, welches bei der ersten Mustererfassung zur Bestimmung der Palettenlage, nicht mehr vorhanden ist, so wird ein weiteres Palettenmerkmal zur Bestimmung von Palettenlage und Prüfbereich verwendet. Dabei ist dieses weitere Palettenmerkmal in den Palettendaten der ersten Mustererfassung und der zweiten Mustererfassung enthalten.

Zur eindeutigen Identifizierung einer Palette ist es somit nicht erforderlich, die gesamte Palette zu erfassen, sondern lediglich ein Muster und das auch nur abschnittsweise. Dies führt zu geringeren zu verarbeitenden Datenmengen und damit zu höheren Geschwindigkeiten bei der Identifikation einer Palette. Dies ist insbesondere von Bedeutung vor dem Hintergrund, dass moderne Objekterfassungseinheiten eine sehr hohe Auflösung aufweisen und somit große Datenmengen produzieren.

Eine weitere Ausführungsform der Erfindung ist dadurch gekennzeichnet, dass die Prüfbereichssignatur zusammen mit weiteren Daten gespeichert wird. Weitere Daten sind relevante Daten wie Ort, Datum und Uhrzeit. Diese Daten werden unter dem Identifikator dieser Prüfbereichssignatur oder als separate Einträge gespeichert.

Eine vorteilhafte Ausgestaltung des Palettenidentifikationssystems ist dadurch gekennzeichnet, dass die Objekterfassungseinheit als Teil eines mobilen Endgeräts ausgebildet ist.

Ein mobiles Endgerät im Sinne der Erfindung ist aufgrund seiner Größe und/oder seines Gewichts ohne größere körperliche Anstrengung tragbar und somit mobil einsetzbar. Ein derartiges Endgerät ist mit einem Daten- oder Telekommunikationsnetz verbindbar. Es ist beispielsweise ausgebildet als eine mobile Datenerfassungseinheit, wie beispielsweise ein Mobiltelefon, ein Smartphone, eine Smartwatch, ein Tablett PC, ein Notebook, ein Imager oder eine Kombination aus zumindest zwei der Vorgenannten. Ein Imager ist eine mobile Kamera mit integrierter Beleuchtung.

In einer Ausführungsform der Erfindung ist das mobile Endgerät permanent oder über einen bestimmten Zeitraum mit einem Daten- und/oder Telekommunikationsnetz verbunden.

In einer weiteren Ausführungsform der Erfindung werden die Prüfbereichssignaturen lokal auf dem mobilen Endgerät gespeichert, insbesondere diejenigen Prüfbereichssignaturen, von denen zu erwarten ist, dass sie verwendet und/oder benötigt werden. Dies ermöglicht eine Nutzung des Palettenidentifikationssystems ohne permanente Verbindung mit einem Daten- oder Telekommunikationsnetz.

Eine vorteilhafte Ausgestaltung des Palettenidentifikationssystems ist dadurch gekennzeichnet, dass der Prüfbereich mit Hilfe eines bereitgestellten CAD-Modells der Palette bestimmt wird.

In einer Ausführungsform der Erfindung wird das CAD-Modell der Prüfbereichsbestimmungseinheit beispielsweise mit Hilfe einer Datenbank, eines Speichermediums oder einer anderen geeigneten Übertragungsweise bereitgestellt.

In einer bevorzugten Ausführungsform der Erfindung enthält das bereitgestellte CAD-Modell einen durch eine Prüfbereichsbegrenzung begrenzten Prüfbereich.

Eine vorteilhafte Ausgestaltung des Palettenidentifikationssystems ist dadurch gekennzeichnet, dass die computergestützte Auswerteeinheit ferner aufweist
eine Bildqualitätssicherungseinheit,
wobei die Bildqualitätssicherungseinheit aus Teilen der Palettendaten einen Istqualitätsvektor bildet, diesen Istqualitätsvektor mit einem Sollqualitätsvektor vergleicht und daraus eine Qualitätsdifferenz bildet und diese Qualitätsdifferenz anhand eines Bildeigenschaftskomponenten enthaltenden Qualitätsschwellwertvektors klassifiziert,
wobei Istqualitätsvektor und Sollqualitätsvektor nach Art und Anzahl gleiche Bildeigenschaftskomponenten enthalten,
wobei der Qualitätsschwellwertvektor gebildet ist aus dem paarweisen Vergleich der Bildeigenschaftskomponenten von Sollqualitätsvektor und Istqualitätsvektor.

Bildeigenschaftskomponenten sind bevorzugt gebildet aus Bildschärfe, Bildhelligkeit, Bildkontrast, Verzeichnung, Farbverlauf, Grauwerte, Position oder Drehlage oder einer Kombination zumindest zwei der Vorgenannten. Die vorstehend genannten Bildeigenschaftskomponenten sind nur beispielhaft und nicht abschließend.

Ein großer Unterschied von Sollwert und Istwert in lediglich einer Bildeigenschaftskomponente, beispielsweise der Bildschärfe, ist ausreichend, um die Qualitätsdifferenz als zu groß für eine Weiterverarbeitung zu klassifizieren.

Ein Sollqualitätsvektor enthält die Mindestanforderungen an Bildinformationen, welche für die weitere Bildverarbeitung mindestens erforderlich sind. Der Sollqualitätsvektor enthält lediglich die für die Beurteilung der Bildqualität geeigneten Bildinformationen, insbesondere Informationen zu Bildschärfe, Bildhelligkeit, Bildkontrast, Verzeichnung, Drehlage, oder Farbverlauf sowie weitere in der Bildverarbeitung übliche Bildmerkmale oder eine Kombination mehrerer aus den Vorgenannten. Diese Mindestanforderungen sind meist technisch bedingt und/oder werden, beispielsweise vom Nutzer des Systems, vorgegeben.

Ein Istqualitätsvektor enthält die in den Palettendaten enthaltenen, also tatsächlichen, Informationen zu Bildeigenschaftskomponenten wie Bildschärfe, Bildhelligkeit, Bildkontrast, Verzeichnung Drehlage oder Farbverlauf oder eine Kombination mehrerer aus den Vorgenannten.

Beim paarweisen Vergleich der Bildeigenschaftskomponenten von Sollqualitätsvektor und Istqualitätsvektor ist es nicht erforderlich, alle vorgenannten Bildeigenschaftskomponenten zu verwenden. Ein derartiger paarweiser Vergleich ist auch nur anhand einer oder zweier Bildeigenschaftskomponenten möglich. Für den paarweisen Vergleich ist aber erforderlich, dass sowohl Sollqualitätsvektor als auch Istqualitätsvektor die gleichen vergleichenden Bildeigenschaftskomponenten aufweisen, beispielsweise Bildschärfe und Verzeichnung.

Umgangssprachlich ausgedrückt enthält der Sollqualitätsvektor die Sollwerte der erforderlichen Bildeigenschaftskomponenten und der Istqualitätsvektor enthält die tatsächlichen Werte der Bildeigenschaftskomponenten, quasi wie bei einem Zeugnis.

Der Qualitätsschwellwertvektor enthält die Qualitätsdifferenzen der Bildeigenschaftskomponenten, welche aus dem paarweisen Vergleich der Bildeigenschaftskomponenten von Sollqualitätsvektor und Istqualitätsvektor gebildet wurden.

Die Signalisierungseinheit ist derart ausgebildet und eingerichtet, dass sie insbesondere die Prüfbereichsabweichung, die Qualitätsdifferenz, die Signaturabweichung oder eine Kombination mindestens zweier davon anzeigt.

Eine vorteilhafte Ausgestaltung des Palettenidentifikationssystems ist dadurch gekennzeichnet, dass die Bildqualitätssicherungseinheit die Qualitätsdifferenz einer Bildeigenschaftskomponente anzeigt. Liegt die Qualitätsdifferenz einer Bildeigenschaftskomponente unterhalb eines definierten Qualitätsschwellwertes so gilt diese Bildeigenschaftskomponente als qualitativ ausreichend für die weitere Verwendung, insbesondere für die Bestimmung der Palettenlage. Dieser Qualitätsschwellwert wird je nach Palette definiert.

In einer bevorzugten Ausführungsform der Erfindung gibt die Bildqualitätssicherungseinheit zusätzlich zur Qualitätsdifferenz auch Hinweise zur Korrektur der Bildqualität. Derartige Hinweise sind beispielsweise Positionierungshinweise für die Objekterfassungseinheit und/oder die Palette, insbesondere Hinweise wie Objekterfassungseinheit / Palette verschieben, drehen und/oder Abstand verringern oder vergrößern.

Eine vorteilhafte Ausgestaltung des Palettenidentifikationssystems ist dadurch gekennzeichnet, dass die Bildqualitätssicherungseinheit die eine Bildeigenschaftskomponente des Istqualitätsvektors korrigiert bis die Qualitätsdifferenz dieser Bildeigenschaftskomponente unter einem Qualitätsschwellwert liegt.

In einer bevorzugten Ausführungsform der Erfindung erkennt die Bildqualitätssicherungseinheit, dass die Qualitätsdifferenz auf einer Verdrehung in der Ebene des Musters der zweiten Mustererfassung gegenüber dem Muster der ersten Mustererfassung beruht. Die Bildqualitätssicherungseinheit korrigiert mittels eines Algorithmus' die Palettendaten derart, dass die Palettendaten des Musters der zweiten Mustererfassung gedreht werden bis die Verdrehung gegenüber dem Muster der ersten Mustererfassung so gering ist, dass die Qualitätsdifferenz unter dem als ausreichend qualifizierten Qualitätsschwellwert liegt. Diese gedrehten, d.h. entsprechend der Verdrehung des Musters adaptierten, Palettendaten werden nachfolgend verwendet, den Prüfbereich zu bestimmen, daraus die Signaturdaten zu gewinnen und folgend die Prüfbereichssignatur zu erhalten. Mit anderen Worten zusammengefasst: Die Bildqualitätssicherungseinheit dreht die Palettendaten des Musters der zweiten Mustererfassung in die Position des Musters der ersten Mustererfassung. Voraussetzung hierfür ist, dass sich diese beiden Muster in einer Ebene oder annähernd in einer Ebene befinden.

In einer weiteren bevorzugten Ausführungsform der Erfindung erkennt die Bildqualitätssicherungseinheit, dass die Qualitätsdifferenz auf einer Verschiebung in der Ebene des Musters der zweiten Mustererfassung gegenüber dem Muster der ersten Mustererfassung beruht. Die Bildqualitätssicherungseinheit korrigiert mittels eines Algorithmus' die Palettendaten derart, dass die Palettendaten des Musters der zweiten Mustererfassung verschoben werden bis die Verschiebung gegenüber dem Muster der ersten Mustererfassung so gering ist, dass die Qualitätsdifferenz unter dem als ausreichend qualifizierten Qualitätsschwellwert liegt. Diese verschobenen, d.h. entsprechend der Verschiebung des zweiten Musters adaptierten, Palettendaten werden nachfolgend verwendet, den Prüfbereich zu bestimmen, daraus die Signaturdaten zu gewinnen und folgend die Prüfbereichssignatur zu erhalten. Mit anderen Worten zusammengefasst: Die Bildqualitätssicherungseinheit verschiebt die Palettendaten des Musters der zweiten Mustererfassung in die Position des Musters der ersten Mustererfassung. Voraussetzung hierfür ist, dass sich diese beiden Muster in einer Ebene oder annähernd in einer Ebene befinden.

In einer weiteren bevorzugten Ausführungsform der Erfindung erkennt die Bildqualitätssicherungseinheit, dass die Qualitätsdifferenz auf einem Abstandsunterschied des Musters der zweiten Mustererfassung gegenüber dem Muster der ersten Mustererfassung beruht, wobei beide Muster parallel oder annähernd parallel zueinander angeordnet sind. Die Bildqualitätssicherungseinheit korrigiert mittels eines Algorithmus' die Palettendaten der zweiten Mustererfassung, indem die Palettendaten der zweiten Mustererfassung in die Position bewegt werden bis eine Bildschärfe erreicht wird, die unter einem bestimmen Schwellwert liegt, der als ausreichende Bildschärfe definiert ist. Hierbei sind geringe Abweichung in der Parallelität beider Muster vom Erfindungsgedanken mit abgedeckt. In einer bevorzugten Ausführungsform der Erfindung erfolgt die Korrektur des vorgenannten Abstandsunterschieds mittels zoomen.

In einer alternativen Ausführungsform der Erfindung erkennt die Bildqualitätssicherungseinheit, dass die Qualitätsdifferenz auf einem Abstandsunterschied, einer Verdrehung, einer Verschiebung und/oder einer Schieflage in der Ebene des Musters der zweiten Mustererfassung gegenüber dem Muster der ersten Mustererfassung beruht. Die Bildqualitätssicherungseinheit fordert durch ein Signal zur Korrektur der Verdrehung, der Verschiebung, des Abstandsunterschiedes und/oder der Schieflage in der Ebene der zweiten Mustererfassung durch Lagekorrektur der Objekterfassungseinheit und/oder der Palette auf. Das vorgenannte Signal kann ein elektrisches Signal an ein teil-/vollautomatisiertes Handlingsystem wie einen Roboter oder ein grafisches Signal für einen menschlichen Benutzer, beispielsweise im Fall eines handgehaltenen mobilen Endgerätes, sein. Die Anpassung der Lage der Objekterfassungseinheit und/oder des Musters der zweiten Mustererfassung wird so lange wiederholt, bis die Qualitätsdifferenz den definierten Qualitätsschwellwert unterschreitet.

In einer weiteren Ausführungsform der Erfindung erkennt die Bildqualitätssicherungseinheit, dass die Qualitätsdifferenz auf einem Abstandsunterschied oder einer Verdrehung oder Verschiebung von Muster der zweiten Mustererfassung gegenüber dem Muster der ersten Mustererfassung und einer Schieflage in der Ebene beider vorgenannten Muster zueinander beruht. Hierbei wird in einer Ausführungsform der Erfindung zunächst die Schieflage beider Muster in der Ebene durch ein teil-/vollautomatisiertes Handlingsystem oder durch den Benutzer korrigiert. Anschließend wird die Verdrehung oder Verschiebung in der Ebene oder die parallele Abstandsverschiebung des Musters der zweiten Mustererfassung mittels eines Algorithmus' korrigiert. In einer anderen Ausführungsform der Erfindung wird zunächst die Verdrehung oder Verschiebung in der Ebene oder die parallele Abstandsverschiebung des Musters der zweiten Mustererfassung mittels eines Algorithmus' korrigiert und anschließend die Schieflage beider vorgenannten Muster zueinander in der Ebene durch ein teil-/vollautomatisiertes Handlingsystem oder durch den Benutzer korrigiert.

Eine Abweichung von wenigen Prozent gilt als annähernd parallel oder in einer Ebene befindlich für die vorgenannten Ausführungsformen der Erfindung.

Die oben genannte Aufgabe wird auch durch ein Verfahren zum Identifizieren einer Palette gelöst, welches die folgenden Schritte aufweist:
- Erfassen eines Musters und eines Palettenmerkmals einer Palette mit einer Objekterfassungseinheit,
- Generieren von Palettendaten aus dem erfassten Muster und dem Palettenmerkmal,
- Identifizieren einer Palettenlage mit Hilfe des Palettenmerkmals aus den Palettendaten, wobei die Pose der Palette relativ zur Objekterfassungseinheit die Palettenlage bildet,
- Bestimmen eines Prüfbereichs, welcher sich in der Palettenlage entlang einer Prüfbereichsbegrenzung auf dem Muster erstreckt,
- Erzeugen von Signaturdaten aus Palettendaten, welche innerhalb des Prüfbereichs liegen,
- Generieren einer Prüfbereichssignatur aus den Signaturdaten,
- Vergleichen der Prüfbereichssignatur eines Musters einer zweiten Mustererfassung mit der Prüfbereichssignatur eines Musters einer ersten Mustererfassung, wobei der Prüfbereich des Musters der zweiten Mustererfassung in der gleichen Palettenlage der Palette bestimmt ist wie der Prüfbereich des Musters der ersten Mustererfassung,
- Bestimmen einer Signaturabweichung aus dem Vergleich der Prüfbereichssignatur einer zweiten Mustererfassung und der Prüfbereichssignatur einer ersten Mustererfassung, und
- Klassifizieren der Signaturabweichung.

Soweit zuvor Aspekte der Erfindung im Hinblick auf das System beschrieben werden, so gelten diese auch für das entsprechende Verfahren zum Identifizieren einer Palette und umgekehrt. Soweit das Verfahren mit einem System gemäß dieser Erfindung ausgeführt wird, so weist dieses die entsprechenden Einrichtungen hierfür auf. Insbesondere sind Ausführungsformen des Systems zum Ausführen der hier beschriebenen Ausführungsformen des Verfahrens geeignet.

Eine vorteilhafte Ausgestaltung des Verfahrens zum Identifizieren einer Palette ist gekennzeichnet durch
- Bilden eines Istqualitätsvektors und eines Sollqualitätsvektors jeweils mit Bildeigenschaftskomponenten aus Teilen der Palettendaten, wobei Istqualitätsvektor und Sollqualitätsvektor nach Art und Anzahl gleiche Bildeigenschaftskomponenten enthalten;
- paarweises Vergleichen der Bildeigenschaftskomponenten von Istqualitätsvektor und Sollqualitätsvektor;
- Bilden einer Qualitätsdifferenz der Bildeigenschaftskomponenten von Istqualitätsvektor und Sollqualitätsvektor;
- Klassifizieren der Qualitätsdifferenz mittels eines Bildeigenschaftskomponenten enthaltenden Qualitätsschwellwertvektors.

Eine vorteilhafte Ausgestaltung des Verfahrens zum Identifizieren einer Palette ist gekennzeichnet durch Anzeigen der Qualitätsdifferenz einer Bildeigenschaftskomponente.

Eine vorteilhafte Ausgestaltung des Verfahrens zum Identifizieren einer Palette ist gekennzeichnet durch Korrigieren einer Bildeigenschaftskomponente des Istqualitätsvektors bis die Qualitätsdifferenz dieser Bildeigenschaftskomponente unter einem Qualitätsschwellwert liegt.

Das Korrigieren der Bildeigenschaftskomponente des Istqualitätsvektors erfolgt durch den Nutzer selbst oder mit Hilfe eines Algorithmus'.

Weitere Vorteile, Merkmale und Anwendungsmöglichkeiten der vorliegenden Erfindung werden anhand der folgenden Beschreibung von Ausführungsformen und der dazugehörigen Figuren deutlich.

In den Figuren sind identische Elemente mit identischen Bezugszeichen bezeichnet.
Figur 1 zeigt in einer schematischen Darstellung eine Palette, einen Abschnitt dieser Palette mit einem Muster, einem Prüfbereich, einer Prüfbereichsbegrenzung und vier Palettenmerkmalen.
Figur 2 zeigt eine Ausführungsform eines erfindungsgemäßen Palettenidentifikationssystems zum Prüfen einer Palette.
Figur 3 zeigt eine Ausführungsform eines erfindungsgemäßen Palettenidentifikationssystems zum Prüfen einer Palette nachdem die Palette einen Veränderungsprozess durchlaufen hat.
Figur 4 zeigt in einem schematisierten Ablauf wie aus Palettendaten eine Signaturabweichung generiert wird.
Figur 5 zeigt ein Beispiel für das Ergebnis einer Signaturabweichung aus einem Signaturvergleich.
Figur 6 zeigt zwei erfasste Muster in unterschiedlicher Bildqualität.
Figur 7 zeigt drei in unterschiedlichen Drehwinkeln erfasste Muster.
Figur 8 zeigt die Palette aus Figur 1 mit einem gegenüber Figur 1 vergrößertem Muster.
Figur 9 zeigt die Palette aus Figur 1 mit einem gegenüber Figur 1 zusätzlichen Muster und Prüfbereich.
Figur 10 zeigt beispielhaft den auf einem Signaturvergleich beruhenden Mustervergleich eines Musters mit drei bereits erfassten Mustern.

In den hier beschriebenen beispielhaften Realisierungen der Erfindung gilt es, eine Palette 12 zu identifizieren.

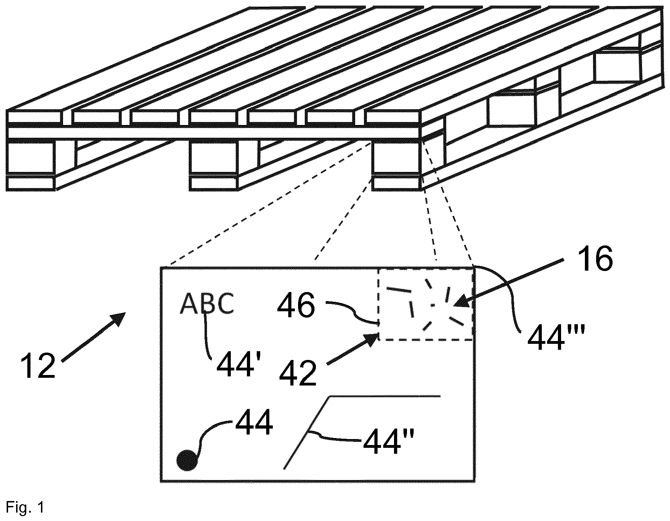

Die Figur 1 zeigt in schematischer Darstellung eine Palette 12 mit einem rechteckigen Abschnitt. Auf diesem rechteckigen Abschnitt der Palette 12 sind beispielhaft vier Palettenmerkmale 44, 44', 44", 44'" dargestellt. Das Palettenmerkmal 44 ist hier gebildet durch eine hier als Kreis dargestellte runde Bohrung, das Palettenmerkmal 44' ist gebildet durch die Buchstabenfolge "ABC", das Palettenmerkmal 44" ist gebildet durch zwei, hier als Linien dargestellte, in einem flachen Winkel miteinander verbundene Nuten und das Palettenmerkmal 44'" ist gebildet durch die rechte obere Ecke der dargestellten rechteckigen Fläche mit einem rechten Winkel.

Im rechten oberen Bereich des rechteckigen Abschnitts der Palette 12 ist ein Muster 16 dargestellt. Das Muster 16 ist in allen dargestellten Ausführungsformen ein Bestandteil der Palette12 und somit nicht von der Palette trennbar, ohne dass das Muster 16 oder die Palette 12 zerstört oder zumindest eines der beiden in seinem Wesen verändert wird. Das Muster 16 ist hier gebildet durch ein, durch Linien dargestelltes Höhen-Tiefenprofil auf der Oberfläche der Palette 12. Dieses Höhen-Tiefenprofil ist beispielsweise eine Maserung einer Holzoberfläche oder die Feinstruktur einer Kunststoffoberfläche.

Auf dem Muster 16 erstreckt sich ein Prüfbereich 42, welcher die gesamte Fläche des Musters 16 umschließt. Der Prüfbereich 42 wird begrenzt durch eine Prüfbereichsbegrenzung 46. Im dargestellten Fall erstreckt sich der Prüfbereich 42 in rechteckiger Form von einem Ursprung entlang der durch die Prüfbereichsbegrenzung 46 eingeschlossenen Fläche. In einem in der Figur 1 nicht dargestellten Fall erstreckt sich der Prüfbereich 42 nur teilweise auf dem Muster 16.

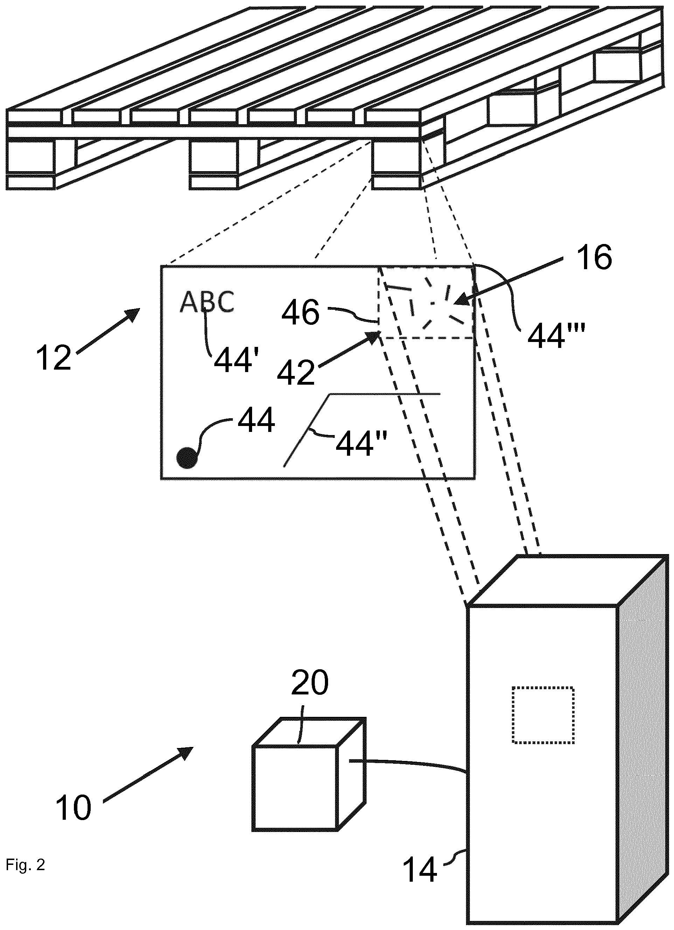

Die Figur 2 zeigt in schematischer Darstellung eine Ausführungsform eines erfindungsgemäßen Palettenidentifikationssystems 10 zum Prüfen der Palette 12. Das dargestellte Palettenidentifikationssystems 10 umfasst eine Objekterfassungseinheit 14 sowie eine mit dieser Objekterfassungseinheit 14 verbundene computergestützte Auswerteeinheit 20. Die Objekterfassungseinheit 14 ist hier beispielhaft gebildet durch eine Flächenkamera oder ein mobiles Endgerät mit einer Kamera. Diese Objekterfassungseinheit 14 ist im hier dargestellten Fall via Datenverbindung mit einer externen computergestützten Auswerteeinheit 20 verbunden.

Das Erfassen der bereits in Figur 1 beschriebenen Palette 12 geschieht wie folgt: Die Objekterfassungseinheit 14 erfasst das bereits beschriebene Muster 16 der Palette 12 sowie die Palettenmerkmale 44, 44', 44". 44"'.

Die Daten des erfassten Musters 16 sowie die Daten zu den Palettenmerkmalen 44, 44', 44", 44'" werden als hier nicht dargestellte Palettendaten 18 an die computergestützte Auswerteeinheit 20 übergeben. Diese Palettendaten 18 werden in weiteren hier nicht dargestellten Einheiten verarbeitet. Da das erfasste Muster nur in einer einzigen Lage der Objekterfassungseinheit gegenüber dem Muster genau in dieser Art zu erfassen ist, gelingt durch Erfassen von beispielsweise Position, Größe und Bildschärfe eines der Palettenmerkmale 44, 44', 44", 44'" die Bestimmung einer Palettenlage. Diese Palettenlage setzt sich wiederum zusammen aus relativer Lage der Objekterfassungseinheit 14 zur Palette 12 und der Pose der Palette 12.

Die Bestimmung Palettenlage der Palette 12 wird in Figur 2 anhand der Position, Größe und Bildschärfe des Palettenmerkmals 44'", also der rechten oberen Ecke der Palette 12, durchgeführt.

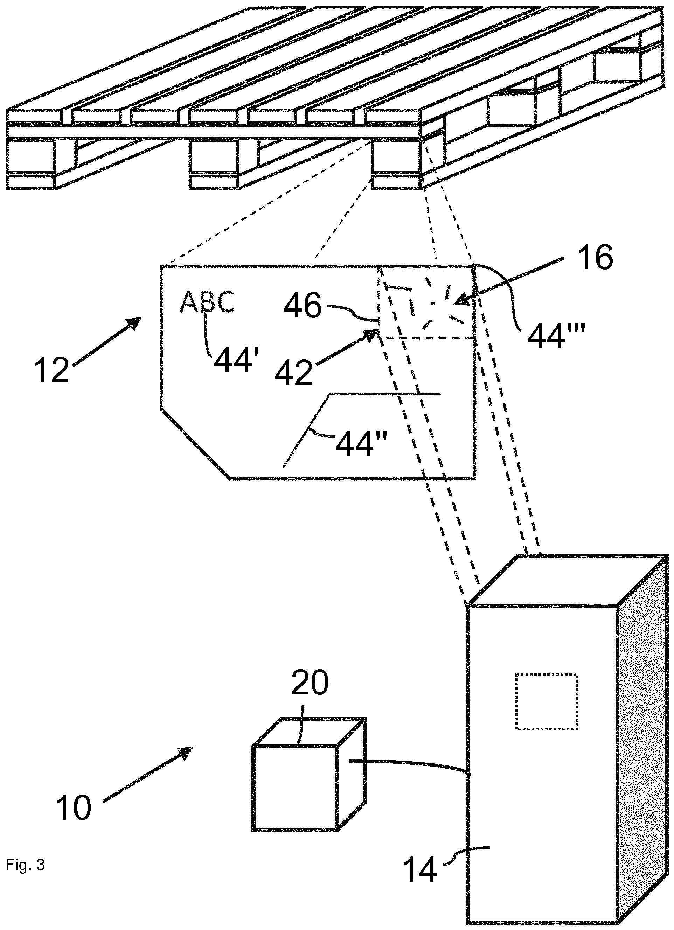

Die Figur 3 zeigt die Palette 12 aus Figur 2 beispielsweise nach einer Beschädigung. Im Gegensatz zu den in Figur 2 beschriebenen Palettendaten 18 werden hier Palettendaten 18' an die computergestützte Auswerteeinheit 20 übergeben. Die Palettendaten 18' enthalten die Daten eines erfassten Musters 16 sowie die Daten zu den Palettenmerkmalen 44', 44", 44'". Ein wesentlicher Unterschied der Palettendaten 18' besteht also darin, dass in diesem Fall das Palettenmerkmal 44, also die durch einen Punkt dargestellte Bohrung, nicht mehr vorhanden ist, da die linke untere Ecke der Palette 12 beispielsweise abgesplittert ist. Somit stehen nur noch die Palettenmerkmale 44', 44", 44'" zur Verfügung, welche nun zur Bestimmung der Palettenlage der Palette 12 verwendet werden. Hierbei zeigt sich die Vorteilhaftigkeit der Erfassung mehrerer Palettenmerkmale. Wäre vor der Absplitterung ausschließlich das Palettenmerkmal 44 erfasst worden, so gelänge die Bestimmung der Palettenlage der Palette 12 in der beschriebenen Weise nicht mehr.

Im Gegensatz zur Verwendung nur eines Palettenmerkmals zur Bestimmung der Palettenlage der Palette, gelingt durch Nutzung mehrerer Palettenmerkmale die Bestimmung der Palettenlage auch dann, wenn ein Palettenmerkmal nicht mehr vorhanden oder beschädigt ist.

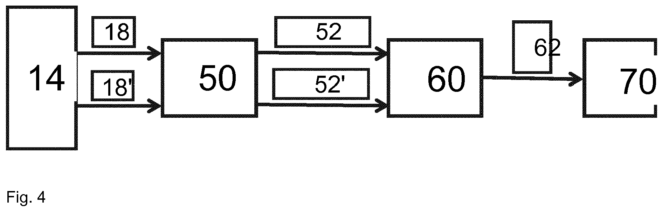

Die Figur 4 zeigt in einem schematisierten Ablauf wie aus Palettendaten 18 und 18' eine Signaturabweichung 70 generiert wird. Eine hier nicht dargestellte Lageidentifikationseinheit erhält die Palettendaten 18 beziehungsweise 18'.

Die Palettendaten 18 sind aus einer ersten Mustererfassung des Musters gewonnen, während die Palettendaten 18' aus einer zweiten Mustererfassung des Musters gewonnen sind.

Die Palettendaten 18 enthalten die Daten zu Position, Größe und Bildschärfe eines erfassten Palettenmerkmals der ersten Palette. In der Figur 4 sind weder Palettenmerkmal noch Palette oder Muster der ersten Mustererfassung dargestellt. Aus den Daten zu Position, Größe und Bildschärfe des Palettenmerkmals dieser ersten Musterfassung speichert die Lageidentifizierungseinheit Daten, welche die Pose der ersten Palette und die relative Lage der hier nicht dargestellten Objekterfassungseinheit zur Palette beschreiben. Diese erste Pose bildet zusammen mit der relativen Lage der hier ebenso nicht dargestellten Objekterfassungseinheit zur Palette eine erste Palettenlage. In dieser ersten Palettenlage bestimmt eine hier ebenfalls nicht dargestellte Prüfbereichsbestimmungseinheit einen Prüfbereich. Dieses Bestimmen des Prüfbereichs erfolgt vorliegend so: Ausgehend vom Palettenmerkmal der ersten Mustererfassung wird entlang der hier nicht dargestellten Prüfbereichsbegrenzungen der Prüfbereich bestimmt, sozusagen virtuell auf das Muster der Palette gelegt. Die Prüfbereichsbegrenzungen umschließen den Prüfbereich auf dem Muster. Alle Palettendaten, die nicht von den Prüfbereichsbegrenzungen umschlossen werden, werden verworfen. Die Palettendaten, die von den Prüfbereichsbegrenzungen umschlossen werden, d.h. innerhalb des Prüfbereichs liegen, werden als hier nicht dargestellte Signaturdaten des Musters der Palette weiterverarbeitet. Aus diesen Signaturdaten generiert ein Signaturgenerator 50 eine Prüfbereichssignatur 52. Diese Prüfbereichssignatur 52 bildet die Charakteristika des erfassten Musters in einer Kombination von geeigneten Zeichen ab.

Die Palettendaten 18' enthalten die Daten zu Position, Größe und Bildschärfe eines erfassten Palettenmerkmals der zweiten Palette sowie Daten eines erfassten Musters dieser zweiten Palette. In der Figur 4 sind weder Palettenmerkmal noch Palette oder Muster der zweiten Mustererfassung dargestellt.

Aus den Daten zu Position, Größe und Bildschärfe des Palettenmerkmals dieser zweiten Musterfassung bestimmt die Lageidentifikationseinheit die Palettenlage der zweiten Palette. Die Palettenlage der zweiten Palette wird aber nicht als absolute Palettenlage bestimmt, sondern in Relation zur Palettenlage der ersten Palette, somit als relative Palettenlage. Damit der Prüfbereich des Musters der zweiten Mustererfassung in der gleichen Palettenlage der Palette bestimmt werden kann wie der Prüfbereich des Musters der ersten Mustererfassung ist es also erforderlich, dass erste Palettenlage und zweite Palettenlage gleich oder annähernd gleich sind. Erst wenn die Abweichung von erster und zweiter Palettenlage einen bestimmten Schwellwert unterschreitet wird auf dem Muster der zweiten Palette ein Prüfbereich bestimmt. Das Bestimmen des Prüfbereichs auf dem Muster der zweiten Palette und einer Prüfbereichssignatur erfolgt analog zum oben bereits beschriebenen Generieren des Prüfbereichs des Musters der ersten Palette. Dabei wird die Prüfbereichssignatur 52' erhalten. Die Prüfbereichssignatur 52' wird nun verglichen mit bereits vorhandenen Prüfbereichssignaturen, also hier mit der Prüfbereichssignatur 52. Dieser Signaturvergleich erfolgt in einer Signaturvergleichseinheit 60. Die Signaturvergleichseinheit 64 liefert als Ergebnis eine Signaturabweichung 62. Diese Signaturabweichung 62 wird anhand zumindest eines Schwellwertes in einer Signaturklassifikationseinheit 70 klassifiziert. Ein geeigneter Schwellwert ist die Ähnlichkeit der Prüfbereichssignatur einer Palette zur Gesamtheit der Prüfbereichssignaturen aller Paletten. Liegt die Signaturabweichung unter dem des als noch ausreichend definierten Signaturschwellwerts, so ist die Signaturabweichung als gering anzusehen und die Palette wird als identifiziert angesehen. Liegt hingegen die Signaturabweichung über dem des als noch ausreichend bestimmten Signaturschwellwert, so ist die Signaturabweichung als groß anzusehen und die Palette wird als nicht identifiziert angesehen.

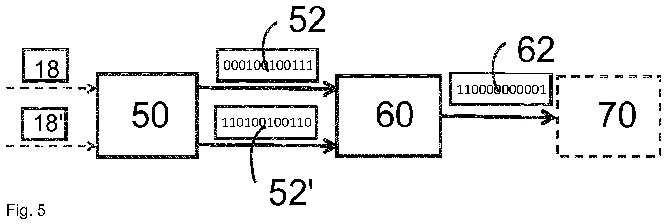

Die Figur 5 zeigt beispielhaft das Ergebnis der Signaturabweichung aus dem Signaturvergleich aus Figur 4. Dabei werden die beispielhaft wiedergegebenen Prüfbereichssignaturen 52 und 52' miteinander verglichen. Das Ergebnis dieses Signaturenvergleichs in der Signaturvergleichseinheit 60 ist die beispielhaft wiedergegebene Signaturabweichung 62, welche wiederum, wie bereits zu Figur 4 beschrieben, von der Signaturklassifikationseinheit 70 klassifiziert wird.

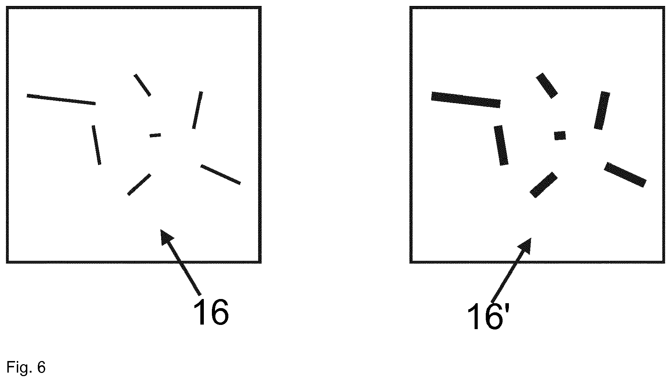

Die Figur 6 zeigt zwei erfasste Muster 16 und 16' in unterschiedlicher Bildqualität. Hierbei ist das Muster 16 verzerrungsfrei mit einer ersten Bildschärfe erfasst. Das Muster 16' hingegen zeigt Verzerrungen, sodass die einzelnen Elemente des Musters 16' dicker erscheinen. Die nicht ausreichende Bildschärfe des Musters 16' ist hier Folge beispielsweise eines zu geringen Abstands von Objekterfassungseinheit und Muster 16'. In diesem Fall wird entweder der Nutzer aufgefordert die Objekterfassungseinheit oder die Palette mit dem Muster 16 in der Weise zu bewegen bis eine Bildschärfe erreicht wird, die unter einem bestimmen Schwellwert liegt, der als ausreichende Bildschärfe definiert ist oder die Palettendaten des erfassten Musters 16 werden mittels eines Algorithmus' verarbeitet bis eine Bildschärfe erreicht wird, die unter einem bestimmen Schwellwert liegt, der als ausreichende Bildschärfe definiert ist.

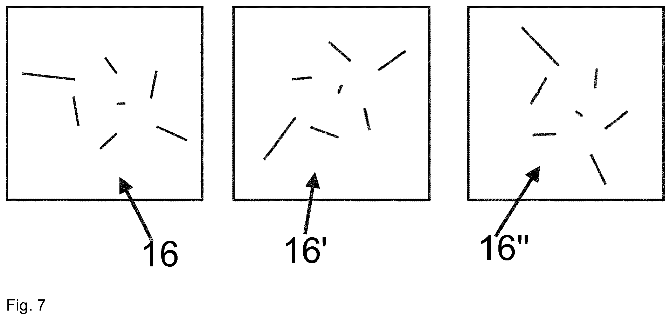

Die Figur 7 zeigt drei in unterschiedlichen Drehwinkeln erfasste Muster 16, 16', 16", welche alle in einer Ebene liegen. Das Muster 16 ist ohne Verdrehung erfasst, also mit einem Drehwinkel von 0°. Das Muster 16' ist gegenüber dem Muster 16 um 60° entgegen des Uhrzeigersinns verdreht. Das Muster 16" ist gegenüber dem Muster 16 um 40° im Uhrzeigersinn verdreht. In einem derartigen Fall erkennt die hier nicht dargestellte Lageidentifikationseinheit die Verdrehung der Muster 16' und 16" gegenüber dem Muster 16. Der Prüfbereich wird als nicht erkannt oder nicht gefunden eingeordnet. Anschließend wird entweder der Nutzer aufgefordert die Objekterfassungseinheit oder die Palette mit dem Muster 16 zu drehen bis die Verdrehung einen als ausreichend klassifizierten Schwellwert, also eine Verdrehung von annähernd 0°, erreicht oder die Palettendaten des erfassten Musters 16' bzw. 16" werden mittels eines Algorithmus' automatisiert in die Position gedreht, bis die Verdrehung einen als ausreichend klassifizierten Schwellwert, also eine Verdrehung von annähernd 0°, erreicht. Ist durch Verdrehung der Palettendaten der als ausreichend klassifizierte Schwellwert erreicht, so werden aus den Palettendaten der erfassten Muster 16' bzw. 16" die entsprechenden Prüfbereiche bestimmt, daraus Signaturdaten erzeugt und daraus zu vergleichende Prüfbereichssignaturen generiert.

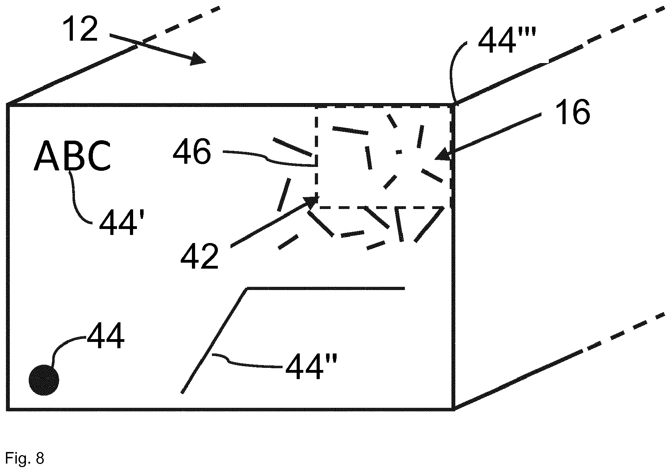

Die Figur 8 zeigt die Palette aus Figur 1 mit einem gegenüber Figur 1 vergrößertem Muster 16. Diese Figur verdeutlicht, dass sich in einer Ausführungsform der Prüfbereich 42 nur abschnittweise auf dem Muster 16 erstreckt, sprich der Prüfbereich 42 ist kleiner als das erfasste Muster 16. Dies hat den Vorteil, dass die zu verarbeitende Datenmenge geringer ist, als würde der Prüfbereich 42 die Fläche des gesamten Musters 16 umfassen.

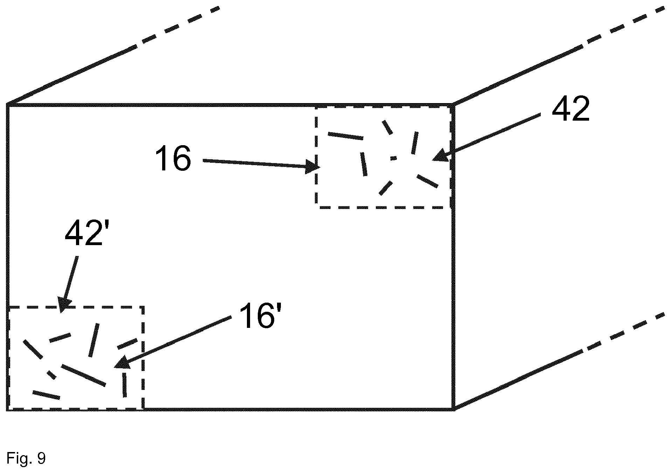

Die Figur 9 zeigt die Palette aus Figur 1 mit einem gegenüber Figur 1 zusätzlichen Muster und Prüfbereich. Bei dieser Ausführungsform der Erfindung wird bei einer Mustererfassung nicht nur ein Muster 16 erfasst, sondern zusätzlich auch ein weiteres Muster 16'. Das weitere Muster 16' wird entsprechend der bereits beschriebenen Schritte weiterverarbeitet. und daraus eine hier nicht dargestellte Prüfbereichssignatur generiert. Dies erweitert die Möglichkeit eine Palette zu identifizieren, welche Veränderungen unterworfen ist, beispielsweise durch Alterung oder unsachgemäße Behandlung.

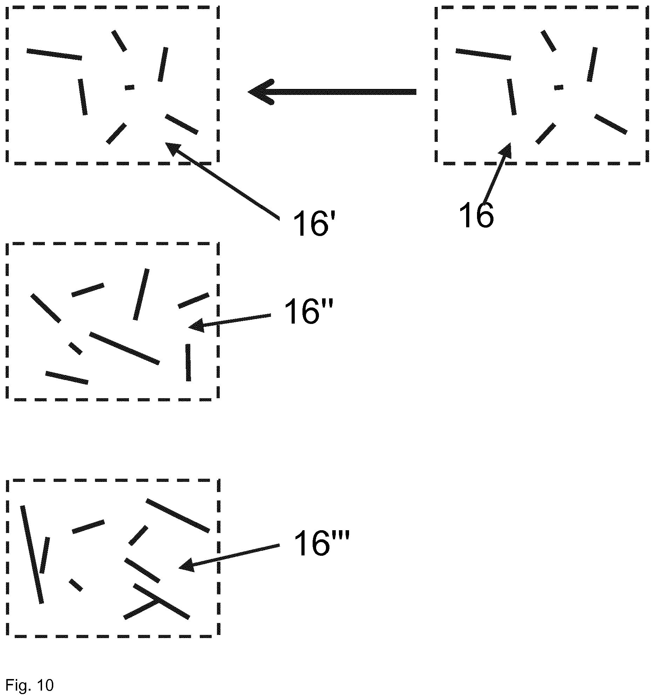

Die Figur 10 zeigt beispielhaft den auf Signaturvergleich beruhendem Mustervergleich eines Musters 16 mit drei bereits erfassten Mustern 16', 16", 16"'. Hierbei wird entsprechend der Erfindung das zuletzt erfasste Muster 16 mit drei in der Vergangenheit erfassten Mustern 16', 16", 16'" verglichen. Hierzu wird eine hier nicht dargestellte Prüfbereichssignatur, welche aus dem Muster 16 generiert wurde, verglichen mit drei hier ebenfalls nicht dargestellten Prüfbereichssignaturen, welche aus den Mustern 16', 16" und 16'" zuvor generiert worden sind. Der Vergleich der Signaturen dieser Muster erfolgt paarweise. Das bedeutet, es erfolgt der Signaturvergleich der Muster 16 und 16', dann der Signaturvergleich der Muster 16 und 16" und anschließend der Signaturvergleich der Muster 16 und 16"'. Entscheidend ist hierbei, dass das Muster 16 mit allen drei anderen Mustern 16', 16" und 16'" verglichen wird, wobei die Reihenfolge der verglichenen Signaturpaare variieren kann.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 10: Palettenidentifikationssystem
- 12: Palette
- 14: Objekterfassungseinheit
- 16, 16', 16", 16'": Muster
- 18, 18': Palettendaten
- 20: computergestützte Auswerteeinheit
- 30: Lageidentifikationseinheit
- 40: Prüfbereichsbestimmungseinheit
- 42: Prüfbereich
- 44, 44', 44", 44'": Palettenmerkmal
- 46: Prüfbereichsbegrenzung
- 50: Signaturgenerator
- 52, 52': Prüfbereichssignatur
- 60: Signaturvergleichseinheit
- 62: Signaturabweichung
- 70: Signaturklassifikationseinheit
- 80: mobiles Endgerät

## Patentansprüche

1. Palettenidentifikationssystem (10) für das Identifizieren einer Palette (12) aufweisend
eine Objekterfassungseinheit (14),
die derart eingerichtet und angeordnet ist, dass sie in einem Betrieb des Palettenidentifikationssystems (10) mittels einer Mustererfassung ein Muster (16) und ein Palettenmerkmal (44) der Palette (12) erfasst und daraus Palettendaten (18) generiert,
wobei das Muster (16) als ein Bestandteil der Palette (12) ausgebildet ist,
wobei das Palettenmerkmal (44) als ein charakteristisches Merkmal der Palette (12) ausgebildet ist, und
eine wirksam mit der Objekterfassungseinheit (14) verbundene computergestützte Auswerteeinheit (20), welche derart eingerichtet ist, dass sie Palettendaten (18) von der Objekterfassungseinheit (14) erhält und diese Palettendaten (18) verarbeitet und bereitstellt, aufweisend
eine deaktivierbare Lageidentifikationseinheit (30), welche derart ausgebildet und eingerichtet ist,
dass sie mit Hilfe des Palettenmerkmals (44) eine Palettenlage bestimmt,
wobei die Palettenlage durch die Pose der Palette (12) relativ zur Objekterfassungseinheit (14) gebildet ist,
eine Prüfbereichsbestimmungseinheit (40), welche derart ausgebildet und eingerichtet ist,
dass sie in der Palettenlage einen Prüfbereich (42) bestimmt,
wobei sich der Prüfbereich (42) entlang einer Prüfbereichsbegrenzung (46) auf dem Muster (16) erstreckt,
einen Signaturgenerator (50),
welcher aus Palettendaten (18) Signaturdaten extrahiert und daraus eine Prüfbereichssignatur (52) generiert,
wobei die Signaturdaten gebildet sind durch diejenigen Palettendaten (18), welche innerhalb des Prüfbereichs (42) liegen,
eine Signaturvergleichseinheit (60),
welche derart ausgebildet und eingerichtet ist, dass sie die Prüfbereichssignatur (52) eines Musters (16) einer zweiten Mustererfassung mit der Prüfbereichssignatur (52') eines Musters (16') einer ersten Mustererfassung vergleicht und daraus eine Signaturabweichung (62) bestimmt,
wobei der Prüfbereich (42) des Musters (16) der zweiten Mustererfassung in der gleichen Palettenlage der Palette (12) bestimmt ist wie der Prüfbereich (42) des Musters (16') der ersten Mustererfassung,
eine die Signaturabweichung (62) klassifizierende Signaturklassifikationseinheit (70).

2. Palettenidentifikationssystem (10) nach Anspruch 1 **dadurch gekennzeichnet, dass** die Objekterfassungseinheit (14) als Teil eines mobilen Endgeräts (80) ausgebildet ist.

3. Palettenidentifikationssystem (10) nach einem der Ansprüche 1 bis 2 **dadurch gekennzeichnet, dass** der Prüfbereich (42) mit Hilfe eines bereitgestellten CAD-Modells bestimmt wird.

4. Palettenidentifikationssystem (10) nach einem der Ansprüche 1 bis 3 **dadurch gekennzeichnet, dass** die computergestützte Auswerteeinheit (20) ferner aufweist
eine Bildqualitätssicherungseinheit,
wobei die Bildqualitätssicherungseinheit aus Teilen der Palettendaten (18) einen Istqualitätsvektor bildet, diesen Istqualitätsvektor mit einem Sollqualitätsvektor vergleicht und daraus eine Qualitätsdifferenz bildet und diese Qualitätsdifferenz anhand eines Bildeigenschaftskomponenten enthaltenden Qualitätsschwellwertvektors klassifiziert,
wobei Istqualitätsvektor und Sollqualitätsvektor nach Art und Anzahl gleiche Bildeigenschaftskomponenten enthalten,
wobei der Qualitätsschwellwertvektor gebildet ist aus dem paarweisen Vergleich der Bildeigenschaftskomponenten von Sollqualitätsvektor und Istqualitätsvektor.

5. Palettenidentifikationssystem (10) nach einem der Ansprüche 1 bis 4 **dadurch gekennzeichnet, dass** die Bildqualitätssicherungseinheit die Qualitätsdifferenz einer Bildeigenschaftskomponente anzeigt.

6. Palettenidentifikationssystem (10) nach einem der Ansprüche 1 bis 4 **dadurch gekennzeichnet, dass** die Bildqualitätssicherungseinheit die eine Bildeigenschaftskomponente des Istqualitätsvektors korrigiert bis die Qualitätsdifferenz dieser Bildeigenschaftskomponente unter einem Qualitätsschwellwert liegt.

7. Verfahren zum Identifizieren einer Palette (12) aufweisend folgende Schritte:
- Erfassen eines Musters (16) und eines Palettenmerkmals (44) einer Palette (12) mit einer Objekterfassungseinheit (14);
- Generieren von Palettendaten (18) aus dem erfassten Muster (16) und dem Palettenmerkmal (44);
- Identifizieren einer Palettenlage mit Hilfe des Palettenmerkmals (44) aus den Palettendaten (18), wobei die Pose der Palette (12) relativ zur Objekterfassungseinheit (14) die Palettenlage bildet;
- Bestimmen eines Prüfbereichs (42), welcher sich in der Palettenlage entlang einer Prüfbereichsbegrenzung (46) auf dem Muster (16) erstreckt;
- Erzeugen von Signaturdaten aus Palettendaten (18), welche innerhalb des Prüfbereichs (42) liegen;
- Generieren einer Prüfbereichssignatur (52) aus den Signaturdaten;
- Vergleichen der Prüfbereichssignatur (52) eines Musters (16) einer zweiten Mustererfassung mit der Prüfbereichssignatur (52') eines Musters (16') einer ersten Mustererfassung, wobei der Prüfbereich (42) des Musters (16) der zweiten Mustererfassung in der gleichen Palettenlage der Palette (12) bestimmt ist wie der Prüfbereich (42) des Musters (16') der ersten Mustererfassung;
- Bestimmen einer Signaturabweichung (62) aus dem Vergleich der Prüfbereichssignatur (52) einer zweiten Mustererfassung und der Prüfbereichssignatur (52') einer ersten Mustererfassung; und
- Klassifizieren der Signaturabweichung (62).

8. Verfahren nach Anspruch 7 **gekennzeichnet durch**
- Bilden eines Istqualitätsvektors und eines Sollqualitätsvektors jeweils mit Bildeigenschaftskomponenten aus Teilen der Palettendaten (18), wobei Istqualitätsvektor und Sollqualitätsvektor nach Art und Anzahl gleiche Bildeigenschaftskomponenten enthalten;
- paarweises Vergleichen der Bildeigenschaftskomponenten von Istqualitätsvektor und Sollqualitätsvektor;
- Bilden einer Qualitätsdifferenz der Bildeigenschaftskomponenten von Istqualitätsvektor und Sollqualitätsvektor;
- Klassifizieren der Qualitätsdifferenz mittels eines Bildeigenschaftskomponenten enthaltenden Qualitätsschwellwertvektors.

9. Verfahren nach Anspruch 8 **gekennzeichnet durch** Anzeigen der Qualitätsdifferenz einer Bildeigenschaftskomponente.

10. Verfahren nach Anspruch 8 **gekennzeichnet durch** Korrigieren einer Bildeigenschaftskomponente des Istqualitätsvektors bis die Qualitätsdifferenz dieser Bildeigenschaftskomponente unter einem Qualitätsschwellwert liegt.
